# EUROPEAN PATENT SPECIFICATION

(11) **EP 3 518 716 B1**
(45) Date of publication and mention of the grant of the patent: **01.11.2023**
(21) Application number: 17857556.9
(22) Date of filing: 29.09.2017
(51) Int. Cl.: A47J 37/06

(54) **COOKING GRATE WITH ADJUSTABLE HEATING CHARACTERISTICS**
KOCHGITTERROST MIT EINSTELLBAREN HEIZEIGENSCHAFTEN
GRILLE DE CUISSON AVEC CARACTÉRISTIQUES DE CHAUFFAGE AJUSTABLES

(30) Priority: 29.09.2016 US 201662401543 P; 28.09.2017 US 201715718225
(43) Date of publication of application: 07.08.2019
(73) Proprietor: W.C. Bradley Co., Columbus, GA 31904 (US)
(72) Inventor: AHMED, Mallik, Columbus GA 31904 (US)
(74) Representative: Script IP Limited
(86) International application number: PCT/US2017/054504
(87) International publication number: WO 2018/064577

(56) References cited:
- GB-A- 2 156 201
- US-A1- 2010 132 689
- US-A1- 2010 132 689
- US-A1- 2010 212 515
- US-A1- 2012 222 665
- US-A1- 2012 222 665
- US-A1- 2013 146 044
- US-A1- 2013 146 044

## Description

### FIELD OF THE INVENTION

This application relates to food preparation in general and, more particularly, to cooking using a grate placed over a heat source.

### BACKGROUND OF THE INVENTION

Cooking with gas and charcoal grills may be done with a combination of convective heat, from hot gases of combustion, and radiant heat, from surfaces heated by such gases in various ways. Cooking with predominately radiant heat (e.g., in excess of 50% or 60% or 70% of the total heat available) at a plane just below or just above the food support element can have benefits with many types of food and cooking styles. However, it is also true that some types of cooking, for example slow cooking with exposure to smoke, may be preferred with less radiant heat than 50%, 60%, or 70%. Previously, products were designed and manufactured without consideration of allowing a user to alter the ratio of convective to radiative heat on the same cooking device.

US 2013/0146044 discloses a multi-part cooking grate with a first sub-grate with a first plurality of V-shaped cooking members and a second sub-grate with a second plurality of V-shaped cooking members. The two grates fit together to define a cooking surface. US 2010/0132689 discloses a cooking grill having a grilling module. An upper grate element and a lower grate element is provided.

What is needed is a system and method for addressing the above, and related, issues.

### SUMMARY OF THE INVENTION

The invention of the present disclosure, in one aspect thereof, comprises a cooking grate as claimed in claim 1.

The cooking members of the first and second sub-grates have an inverted V shape with vertices of the cooking members of the first and second sub-grates terminating and substantially the same level. The cooking members of one of the first and second sub-grates have legs that extend to terminate below the legs of cooking members of the other sub-grate. The cooking members of the first and second sub-grate overlap laterally.

In some embodiments, the first sub-grate retains its associated cooking members at a first predetermined spacing from one another. The second sub-grate may retain its associated cooking members at a second predetermined spacing from one another. The first and second predetermined spacings may be different so as to provide different degrees of heating between radiant and convective heating.

The invention of the present disclosure, in another aspect thereof, comprises a cooking grate as claimed in claim 3.

The plurality of cooking members of each of the sub-grates comprise inverted V shapes with apices terminating at the same level to form the cooking surface. According to the invention, one of the sub-grates forms an upper sub-grate and the other sub-grate forms a lower sub-grate. The cooking members of the lower sub-grate have legs that extend down from the apices below a level of legs extending from the apices of the cooking members of the upper sub-grate. The legs of the upper and lower sub-grate overlap laterally.

Each sub-grate may have two cross members with one affixed at opposite ends of the plurality of cooking members. Each sub-grate may form a separate cooking surface that may be used alone and each separate cooking surface may provide a relatively higher degree of convective cooking energy than the cooking surface formed by the combined sub-grates. Each sub-grate may also have a different lateral spacing between adjacent cooking members thereof than the other sub-grate.

The invention of the present disclosure, in another aspect thereof, comprises a cooking grate as claimed in claim 5.

The parallel cooking members of the first sub-grate have a lateral overlap with cooking members of the second sub-grate. The cooking members of the first and second sub-grate have an inverted V shape and have apices at the same level. The cooking members of the second sub-grate have lower spaced apart legs that extend below lower spaced apart legs of the first sub-grate.

In some embodiments, the first and second cross members removably nest to prevent lengthwise movement between the first and second plurality of cooking members. The first and second sub-grates may each be used as a separate cooking surface that provides a pathway for flame from below to contact food on the separate cooking surfaces. Each of the first and second sub-grates may have an additional cross member with the two cross members of each of the first and second-sub grates forming end caps to the respective parallel cooking members.

### BRIEF DESCRIPTION OF THE DRAWINGS

FIG. 1 is a perspective view of a formed multi-part cooking grate according to aspects of the present disclosure.
FIG. 2 is a perspective side cutaway view of a portion of the cooking grate of FIG. 1.
FIG. 3 is a perspective end cutaway view of the cooking grate of FIG. 1.
FIG. 4 is a close-up end cutaway view of a portion of the cooking grate of FIG. 1.
FIG. 5 is a perspective view of an upper portion of the cooking grate of FIG. 1.
FIG. 6 is a perspective side cutaway view of a portion of the upper cooking grate of FIG. 5.
FIG. 7 is a perspective end cutaway view of the upper grate of FIG. 5.
FIG. 8 is a close-up end cutaway view of a portion of the grate of FIG. 5.
FIG. 9 is a perspective view of a lower cooking grate of FIG. 1.
FIG. 10 is a perspective side cutaway view of a portion of the lower cooking grate of FIG. 9.
FIG. 11 is a perspective end cutaway view of the lower cooking grate of FIG. 9.
FIG. 12 is a close-up end cutaway view of a portion of the lower cooking grate of FIG. 9.
FIG. 13 is a perspective view of another embodiment of a cast or forged multi-part cooking grate according to aspects of the present disclosure.
FIG. 14 is a perspective cutaway view of a portion of the cooking grate of FIG. 13.
FIG. 15 is a close-up end cutaway view of a portion of the cooking grate of FIG. 13.
FIG. 16 is a perspective view of an upper portion of the multi-part cooking grate of FIG. 13.
FIG. 17 is a perspective cutaway view of a portion of the upper cooking grate of FIG. 16.
FIG. 18 is a close-up end cutaway view of a portion of the upper cooking grate of FIG. 16.
FIG. 19 is a perspective view of a lower portion of the multi-part cooking grate of FIG. 13.
FIG. 20 is a perspective cutaway view of a portion of the lower cooking grate of FIG. 19.
FIG. 21 is a close-up end cutaway view of a portion of the lower cooking grate of FIG. 19.
FIG. 22A is a plot of corrected total heat flux for a cooking grate according to the present disclosure on a front location.
FIG. 22B is a plot of corrected total heat flux for the same cooking grate on a center location.
FIG. 22C is a plot of corrected total heat flux for the same cooking grate on a back location.
FIG. 23A is a plot of corrected total heat flux for another cooking grate according to the present disclosure on a front location.
FIG. 23B is a plot of corrected total heat flux for the same cooking grate on a center location.
FIG. 23C is a plot of corrected total heat flux for the same cooking grate on a back location.
FIG. 24 is an end-on cutaway view of a cooking grate with variable spacing between sub-grates according to the present disclosure.
FIG. 25 is a perspective view of another embodiment of multi-part cooking grate according to aspects of the present disclosure.
FIG. 26 is an exploded perspective view of the multi-part cooking grate of FIG. 25 illustrating separated upper and lower cooking grates.
FIG. 27 is a perspective side cutaway view of a portion of the upper cooking grate of FIG. 26.
FIG. 28 is a perspective cutaway view of a portion of the lower cooking grate of FIG. 26.
FIG. 29 is a cutaway perspective view of the multi-part cooking grate of FIG. 25.
FIG. 30 is a cutaway end view of the multi-part cooking grate of FIG. 25.
FIG. 31 is a close up cutaway end view of the multi-part cooking grate of FIG. 25.

### DETAILED DESCRIPTION OF THE PREFERRED EMBODIMENTS

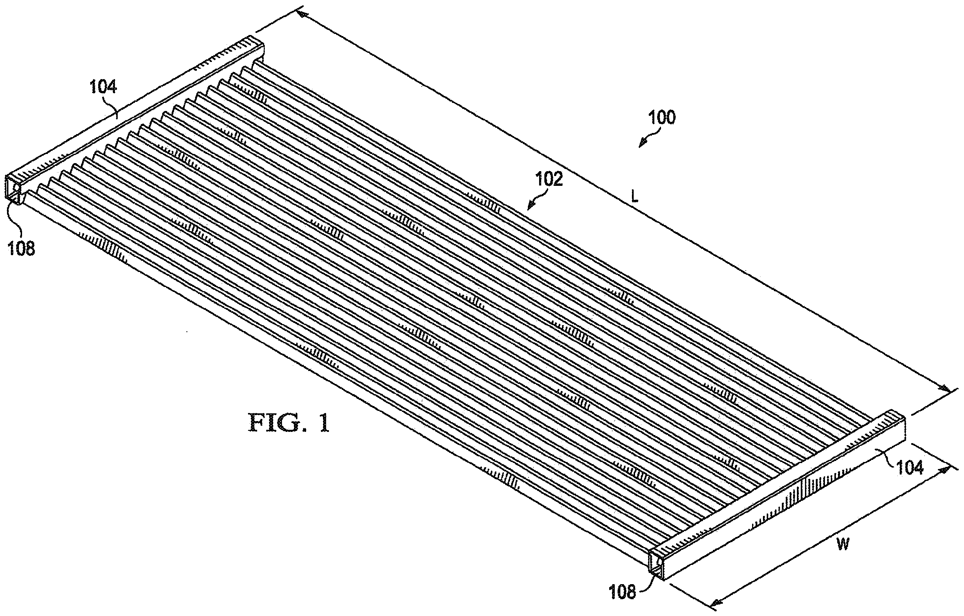

The embodiments shown in FIGS. 1-21 are not according to the invention and are present for illustration purposes only.

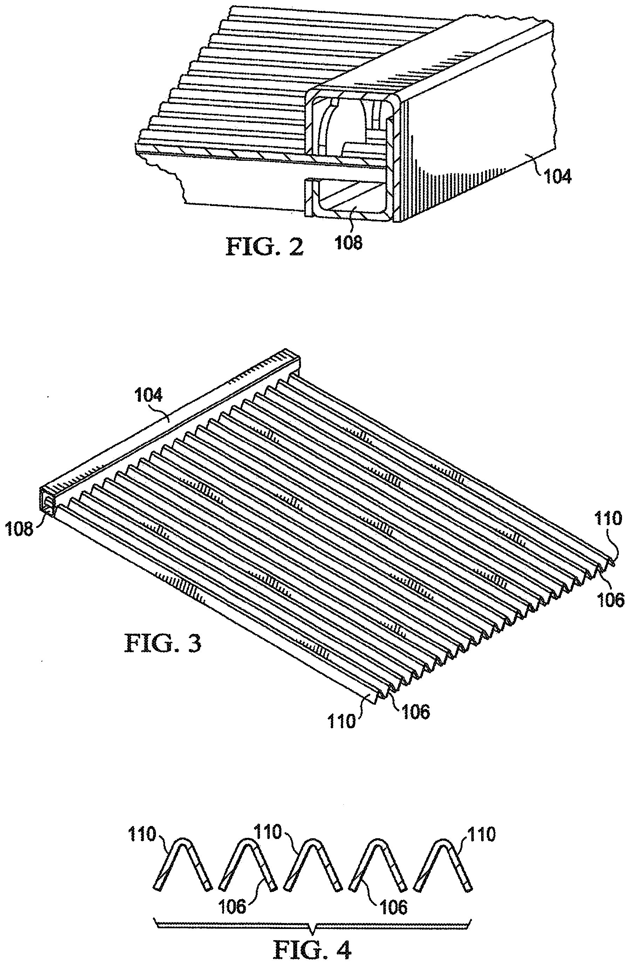

Referring now to FIGS. 1-12, one embodiment of a multi-part cooking grate in accordance with the present disclosure will be described. FIG. 1 is a perspective view of a formed multi-part cooking grate according to aspects of the present disclosure. In the present embodiment, an arrangement of food support elements in a general form of inverted V-shapes are utilized (though other cross sectional shapes can also be used) to form a cooking surface **102.** FIG. 2 is a perspective side cutaway view of a portion of the cooking grate **100** of FIG. 1. FIG. 2 illustrates the interlocking and constructing of cross members **104, 108** discussed further below. FIG. 3 is a perspective end cutaway view of the cooking grate of FIG. 1 illustrating the inverted V-shape of the grill surface **102.**

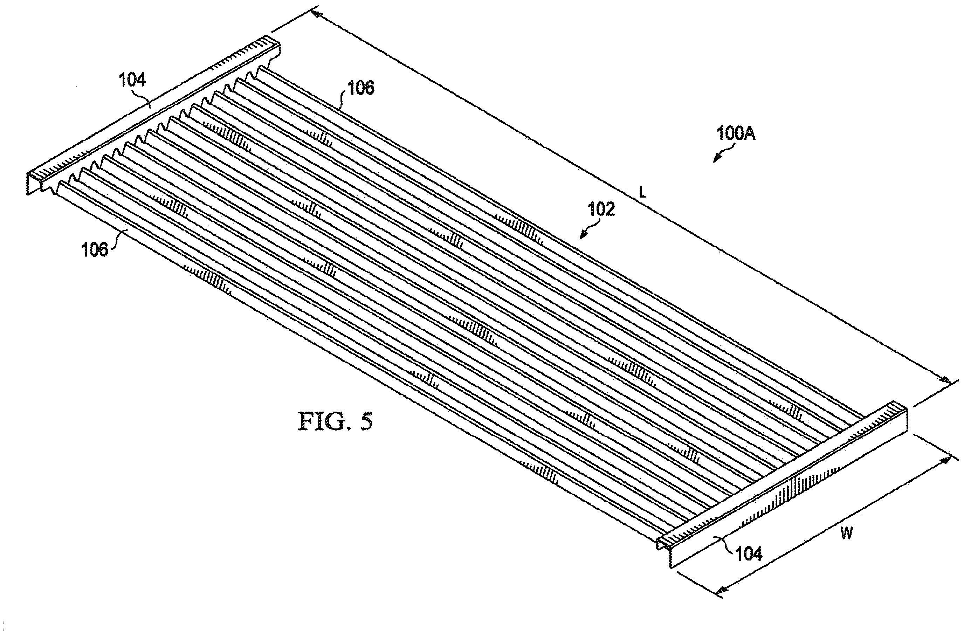

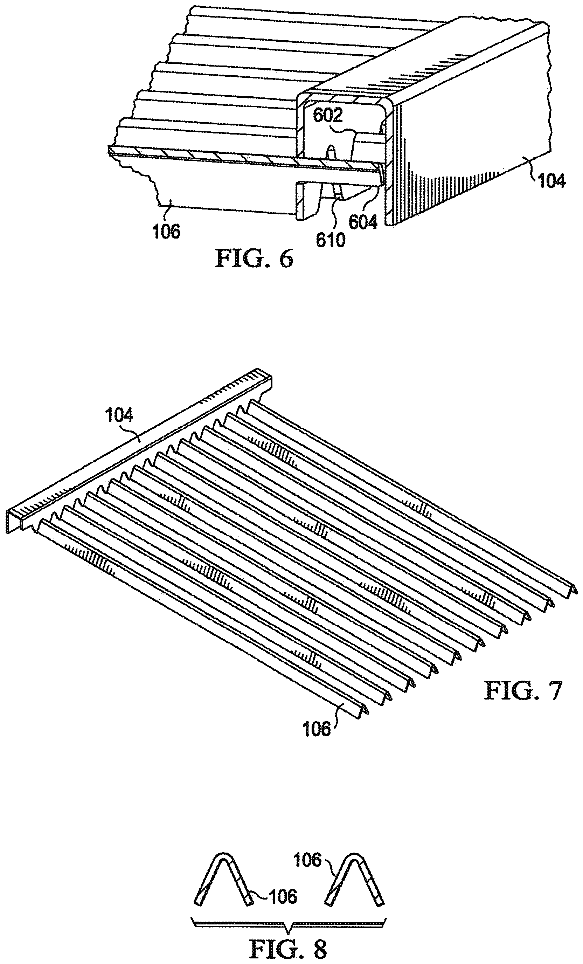

FIG. 4 is a close-up end cutaway view of a portion of the cooking grate **100** of FIG. 1 illustrating that the surface **102** comprises two set sets **106, 110** of V-shaped cooking members. Referring now to FIG. 5, a perspective view of an upper portion **100A** of the cooking grate of FIG. 1 is shown. The upper portion **100A** includes cross members **104** retaining cooking members **106** in a fixed and inverted relationship with respect to one another and forms a portion of the cooking surface **102.** FIG. 6 is a perspective side cutaway view of a portion of the upper cooking grate **100A** of FIG. 5. FIG. 7 is a perspective end cutaway view of the upper grate **100A** of FIG. 5. Finally, FIG. 8 is a close-up end cutaway view of a portion of the grate **100A** of FIG. 5.

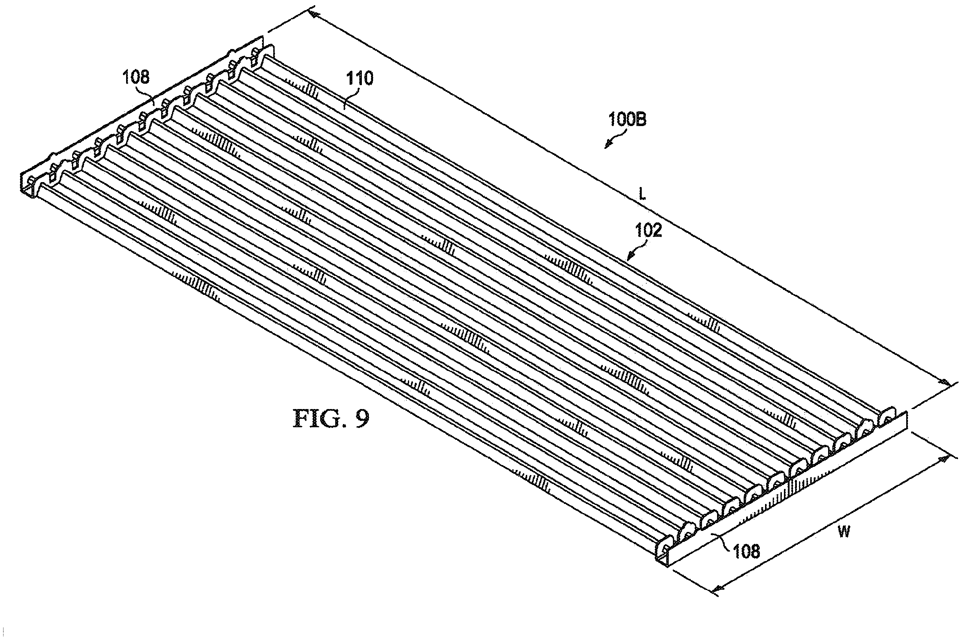

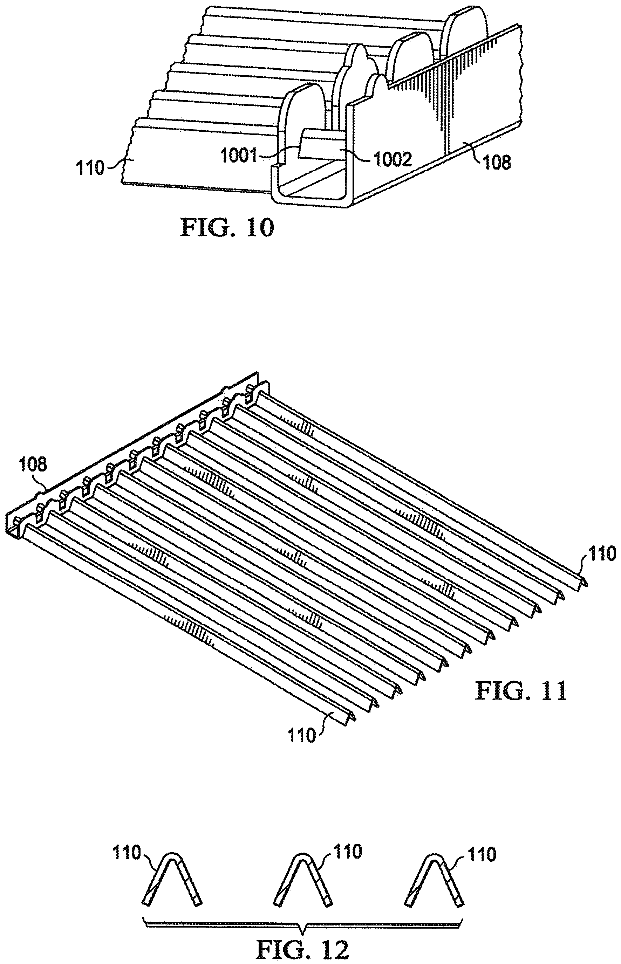

Referring now to FIG. 9, a perspective view of a lower cooking grate **100B** of FIG. 1 is shown. The lower grate **100B** cooperates with the upper grate **100A** to form the complete integrated grate **100** with the full cooking surface **102.** However, each of the sub-grates **100A** and **100B** can be utilized separately to alter cooking characteristics of the surface **102.** FIG. 10 is a perspective side cutaway view of a portion of the lower cooking grate **100B** of FIG. 9. FIG. 11 is a perspective end cutaway view of the lower cooking grate **100B** of FIG. 9. FIG. 12 is a close-up end cutaway view of a portion of the lower cooking grate **100B** of FIG. 9.

With reference to the aforedescribed figures, it will be appreciated that the multi-part cooking grate **100,** comprises the upper sub-grate **100A** (FIG. 5) and the lower sub-grate **100B** (FIG. 9). From the perspective view of FIG. 1, it can be seen that the cooking surface **102** may substantially comprise various pluralities of V-shaped cooking members. The V-shaped cooking members are divided into a first set **106** and a second set **110.** The V-shaped cooking members of the first set **106** are affixed in relation to one another by upper cross members **104.** Together the V-shaped cooking members **106** and the cross members **104** comprise sub-grate **100A.** The V-shaped cooking members of the second set **110** are affixed in relation to one another by lower cross members **108.** Together the V-shaped cooking members **110** and the lower cross members **108** comprise lower sub-grate **100B.**

FIG. 2 illustrates how the upper cross members **104** and the lower cross members **108** have a cooperatively fitting relationship such that when fitted together, the first set of V-shaped cooking members **106** interfits with the second set of V-shaped members **110.** With additional reference to the cutaway views of FIGS. 3 and 4, it can be seen that relatively little space remains between the V-shaped cooking members **106** and **110** in such a configuration.

Returning again to FIG. 5, the cooking grate **100** has been disassembled into its constituent components. FIG. 5 illustrates an upper portion of the grate **100A.** From this view it can be appreciated how the cross members **104** retain the V-shaped cooking members **106** in a fixed relationship relative to one another. With reference to FIGS. 7 and 8 and it can also be seen how a relatively large amount of space is provided between the adjacent V-shaped cooking members **106.**

Referring again to FIG. 9, a lower portion of the cooking grate **100B** is shown. Here it can be seen that the cross members **108** retain the second set of V-shaped cooking members **110** in a fixed relationship relative to one another. With reference to FIGS. 11 and 12, it can be seen how a relatively large amount of space is, once again, provided between the adjacent V-shaped cooking members **110.**

Inset FIGS. 6 and 10 provide additional illustration of the relationship between the cross members **104** and V-shaped cooking members **106,** and the cross members **108** and V-shaped members **110,** respectively. In one embodiment, the cross members **104** are channelized members with cutouts **602** for receiving a portion **604** of each of the V-shaped cooking members **106** and retaining them in a fixed relationship. As can be seen from FIG. 6, the portion **604** within the cutout **602** may only be a portion of the entire end of the V-shaped cooking members **106.** The cross members **104** may also provide a series of V-shaped cooperating recesses **610** on at least one side for interfitting with the cooking members **110** from sub-grating **100B.**

The cooking members **106** may be made from a heat resistant material such as steel, stainless steel, porcelain coated steel, ceramic, ceramic coated metal, or some other suitable material. The cross members **104** may also comprise a heat resistant material. The cross members **104** may be welded to the cooking members **106,** have a friction or interference fit, or be affixed in another heat resistant manner.

Returning to FIG. 10, it can be seen that the cross members **108** may also be channelized with one side having cutouts **1001** for receiving a portion **1002** of the respective lower cooking members **110** to form the lower sub-grating **100B.** The portions **1002** may be retained in the cutouts **1001** by a friction fit, or may be welded or provided with another heat resistant fastener. As shown in FIG. 10, the portions **1001** of the members **110** fitting the cutouts may be cut from the full V-shaped cooking members **110** rather than comprising the full height and width of the members **110** at the ends.

FIG. 2, which illustrates the combined cooking grate **100,** shows how the cross members **104** and **108** nest to prevent end-to-end movement (along length L) of the assembled sub-grating **100A** with **100B.** Here the lower cross member **108** nests within the upper cross member **104,** but the converse could also be implemented. Side-to-side movement (along width W) is inhibited by the interlocking of the upper cooking members **106** beside the lower cooking members **110.** As described, the lower cooking members **110** also cooperate and interfit with the recesses **610** on the upper cross members **104** of the upper sub-grate **100A.**

In the illustrated embodiments, the cross members **104, 108** also serve as end caps such that the respective cooking members **106, 110** are held in a fixed relationship from the ends, thus allowing the cooking surface **2502** to be more or less continuous between opposite ends. However, in other embodiments, cross members may be placed medially rather than, or in addition to, being placed on the ends. In such cases, the cross members **2504, 2508** may have cutouts on both sides for passing at least a portion of the cooking members completely through.

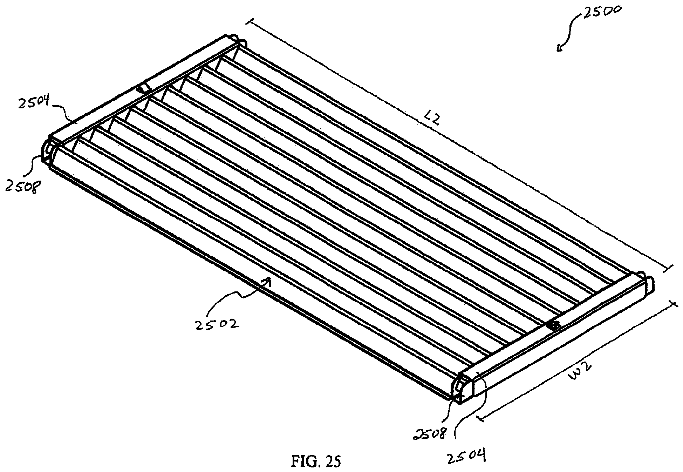

The cooking grate **2500** may be assembled as shown in FIG. 25 such that the combined V-shaped cooking members **2506** and **2510** provide for relatively little hot gas flow to the cooking surface **2502.** Consequently, when configured as shown in FIG. 1, the cooking grate **2500** will provide a relatively larger amount of radiative heating. However, when either one of the upper or lower sub-grates **100A, 100B** is used alone, it can be seen that a relatively large amount of hot gas will be allowed through the cooking surface **102.** Consequently, in the configuration of FIGS. 5 or 9, a relatively high amount of cooking by convection will occur compared to that of FIG. 1.

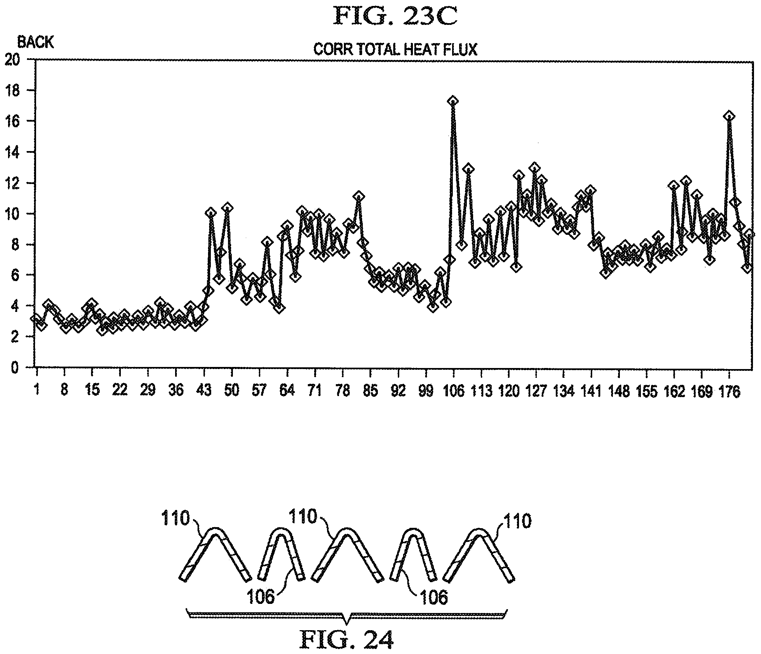

The cooking surface **102** may be easily and quickly reconfigured from that of FIG. 1 to that of FIGS. 5 or 9 by a user without tools. In one embodiment, the space between adjacent V-shaped cooking members of the first set **106** may differ from the spacing between adjacent V-shaped members of the second set **110.** This may be accomplished, for example, by varying the widths of the members of the first set **106** relative to the width of members of the second set **110,** as shown in FIG. 24. In this way, the cooking grate **100A** may provide different cooking characteristics than cooking grate **100B** and each will be different than the combination **100** of FIG. 1. Thus, multiple cooking configurations with differing combinations of radiant and convective heating can be achieved with the same grate device. It should also be understood that the cooking members may not be V-shaped in all embodiments. To greater or lesser degrees, other cooking member shapes, such as round or rectilinear in cross-section, could function with some embodiments of devices of the present disclosure.

The general dimensions of the cooking surface **102** and the constituent components of the grate **100** can be varied according to the needs of the user such that existing gas, charcoal, electric, and other grills can be retrofitted to utilize devices of the present disclosure. In one embodiment the materials used for the construction of the cooking grate **100** is cast iron.

As described, cooking characteristics are influenced by whether the grate **100** is utilized in the combined form including sub-grate **100A** combined with sub-grate **100B,** or whether one of sub-grates **100A, 100B** are used individually. A primary variation in cooking characteristics is in the degree of heating that occurs on the surface **102** as a result of radiative heating (e.g., infrared) versus convective heating.

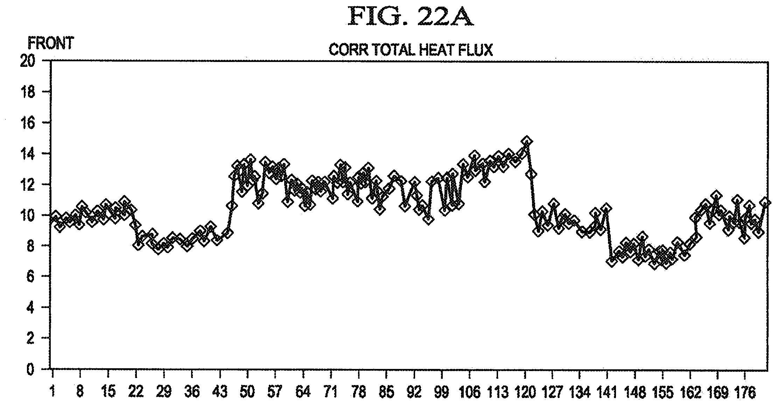

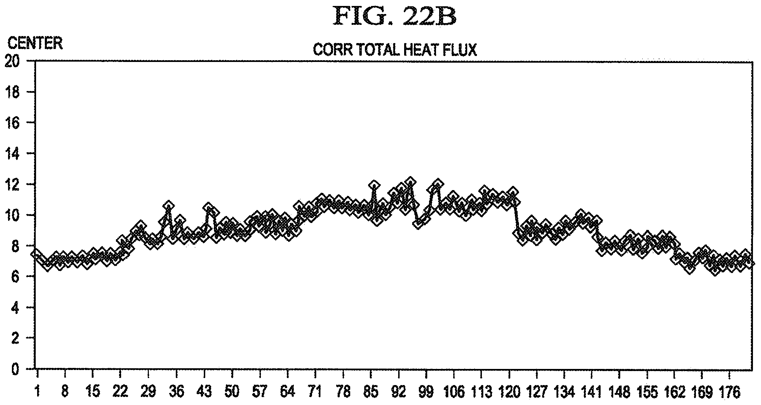

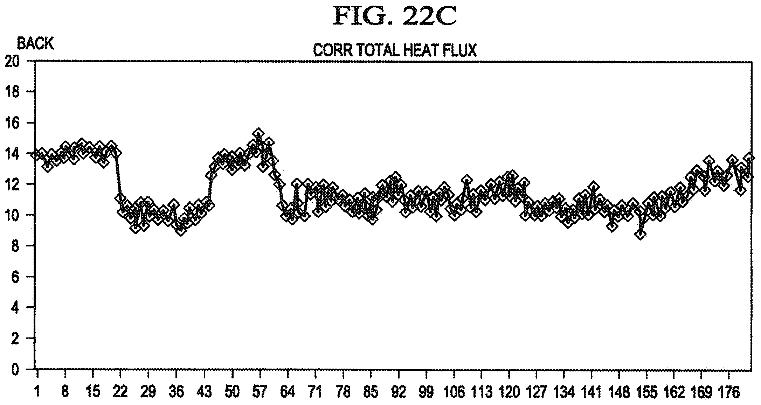

A grate was constructed according to that shown and described herein in FIGS. 1-12. Assembled as shown in FIG. 1, the grate was placed into the firebox of a gas grill with a 8.7 kW (29,853 BTU/hour) heat rate. The total cooking surface was 0.29 m² (446.25 square inches). The heat input to the grate was 30.37205 kW/square meter. The heat flux, percentage of IR, thermal efficiency, and radiative efficiency was measured at the front, center, and back of the grill. The procedure used for measuring and calculating these values is described in a presentation summary entitled "Two New Methods for Measuring Performance of Underfired Broilers" by Alexander T. Gafford and presented to the American Society of Gas Engineers on June 5, 2012 (currently available at www.asgenational.org/Content/ Files/Presentations/2012/TwoNewMethodsMeasuringPerformance_AlexGifford.pdf), hereby incorporated by reference. The results of the test are summarized in Table 1 below. The corrected total heat flux at the front, center, and back are shown in the plots contained in FIGS. 22A, B, and C, respectively.

**Table 1**

| | heat flux | %IR | therm ef | rad ef |
|---|---|---|---|---|
| front | 10.45803 | 78.06689 | 34.43% | 26.78% |
| center | 9.215902 | 80.91794 | 30.34% | 24.58% |
| back | 11.77218 | 79.13757 | 38.76% | 30.75% |
| avg. | 10.48204 | 79.37413 | 0.345121 | 0.273682 |

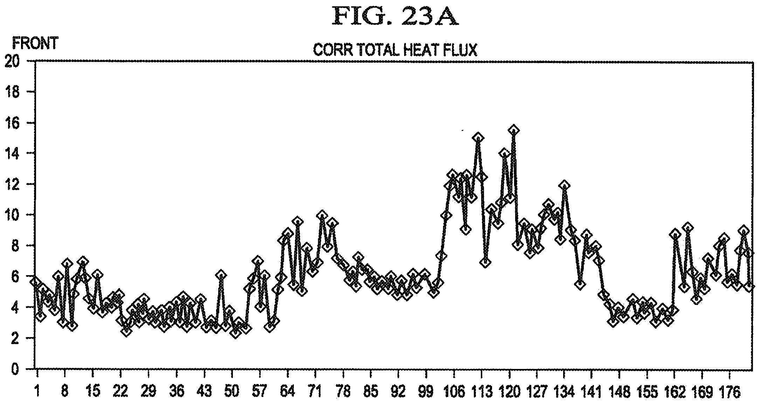

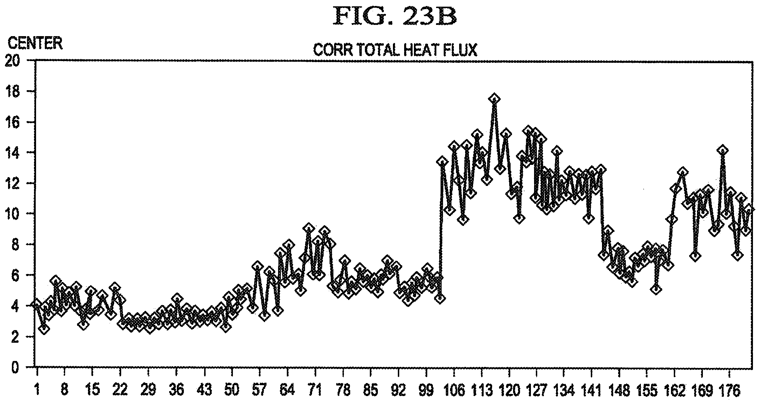

The portion of the tested grate corresponding to the bottom sub-grate **100B** was also tested alone. As shown in FIGS. 9-13, this configuration has a cooking surface **102** that is approximately half, or slightly more, open to the heat source in the firebox. The test procedure and conditions were the same as the initial test with the results summarized in Table 2 below. The corrected heat flux at the front, center, and back of the grating are shown in the plots contained in FIGS. 23 A, B, and C, respectively.

**Table 2**

| | heat flux | %IR | therm ef | rad ef |
|---|---|---|---|---|
| front | 6.269843 | 42.46003 | 20.64% | 8.61% |
| center | 7.524133 | 48.3062 | 24.77% | 11.46% |
| back | 7.035842 | 47.61502 | 23.17% | 10.10% |
| avg. | 6.943273 | 46.12708 | 0.228607 | 0.100549 |

The results from these two tests indicate that with only the sub-grate (e.g., **100B)** the radiant heat was 46.13% and the convective heat was 53.87%. With the fully assembled configuration (e.g., **100)** radiant heat was 79.37% and the convective heat was 20.63%. Since the grating 100 is not air tight, it would be expected that even in the configuration of FIG. 1, some convective heating would occur. However, the normally expected variation across cooking grates is +/- 2%. The system of the present disclosure has demonstrated the ability to decrease (or increase) convective heating by a factor in excess of 2.5.

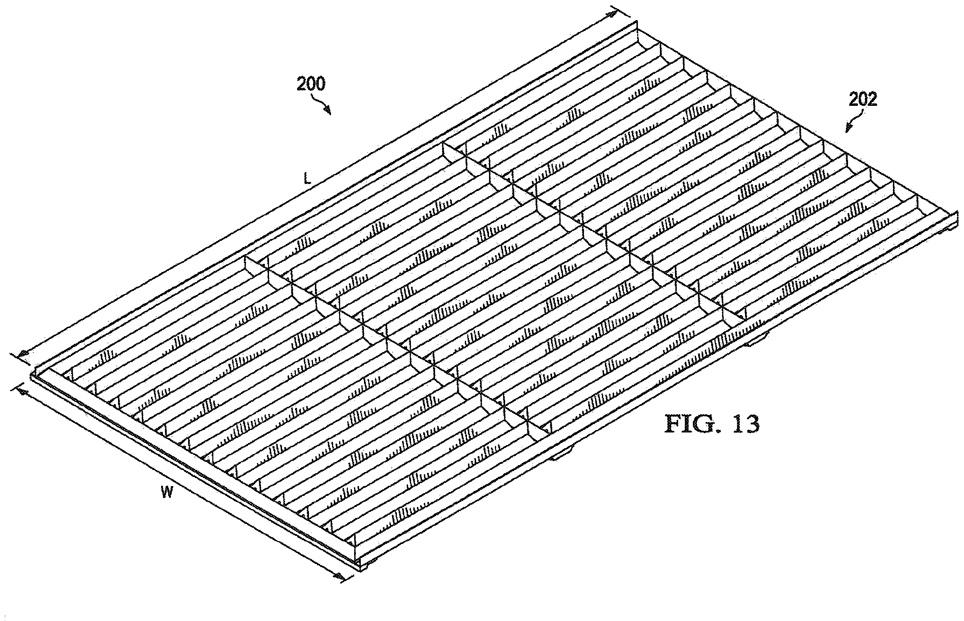

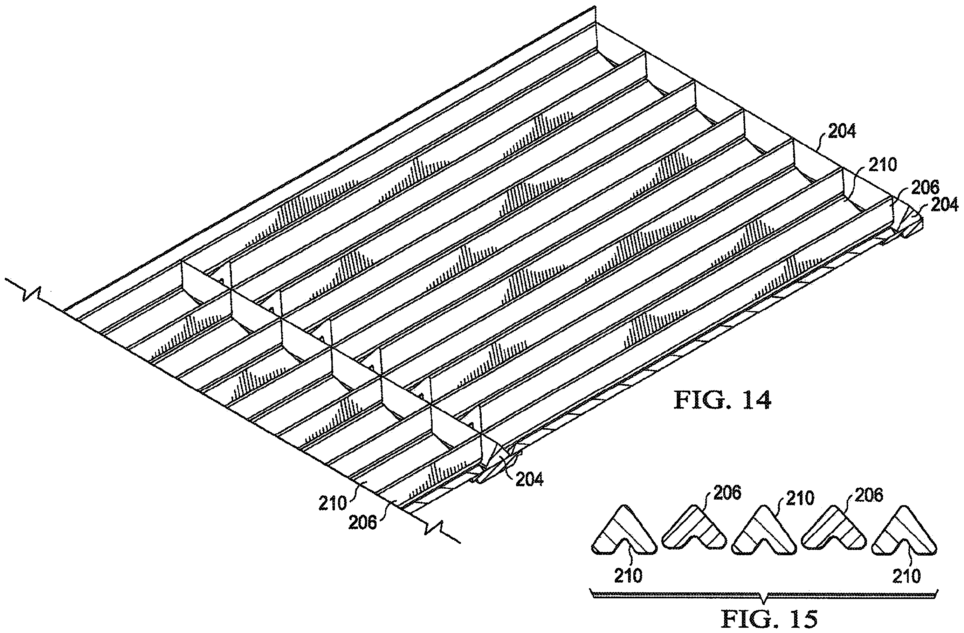

Referring now to FIGS. 13-21 another embodiment of a multi-component cooking grate **200** is shown. FIG. 13 is a perspective view of the grate **200** fully assembled in a radiative cooking mode. FIG. 14 is a perspective cutaway view of a portion of the cooking grate **200** of FIG. 13, and FIG. 15 is a close-up end cutaway view of a portion of the cooking grate **200** of FIG. 13.

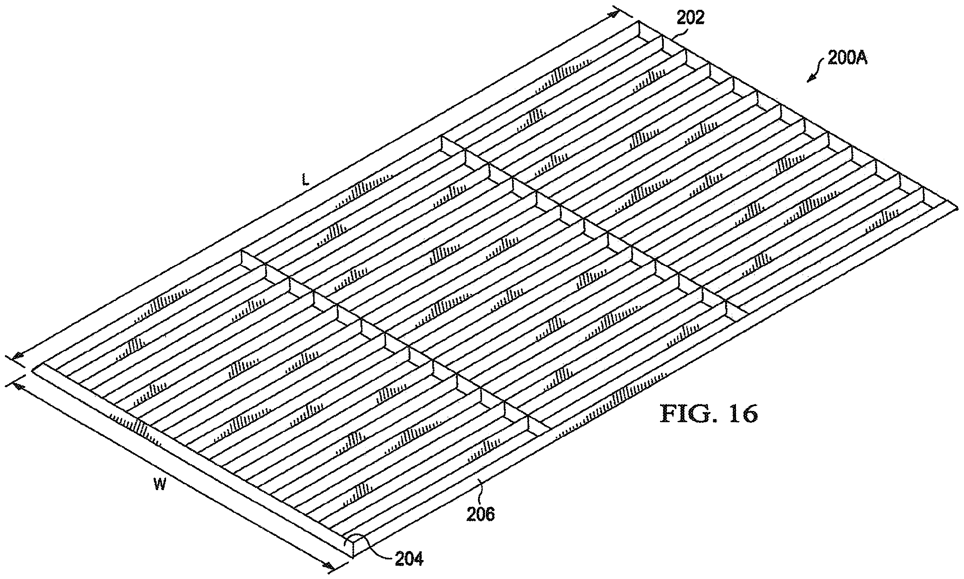

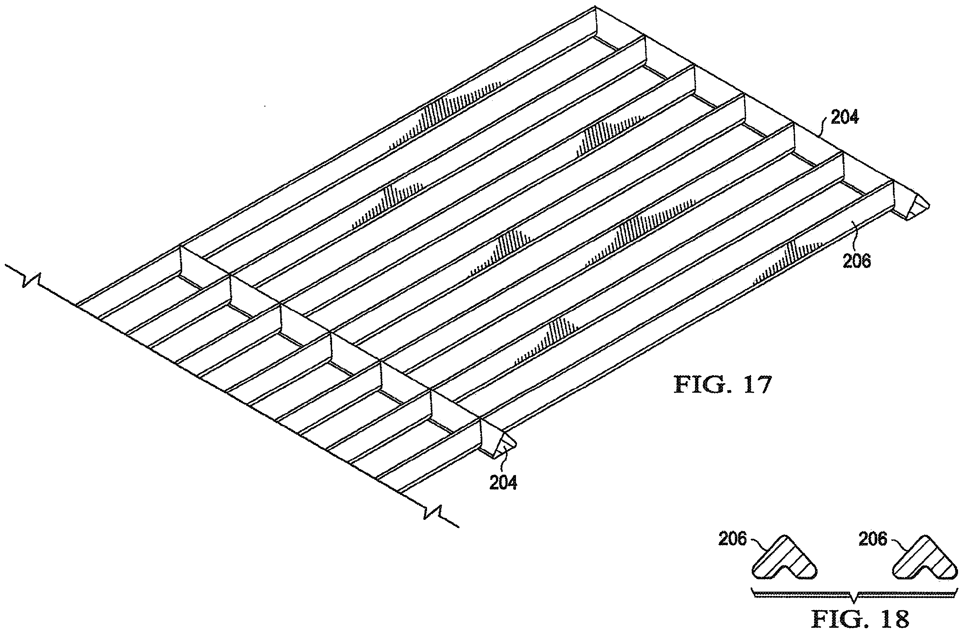

FIG. 16 is a perspective view of an upper portion **200A** of the multi-part cooking grate **200** of FIG. 13. FIG. 17 is a perspective cutaway view of a portion of an upper cooking grate **200A** of FIG. 16, and FIG. 18 is a close-up end cutaway view of a portion of the upper cooking grate **200A** of FIG. 16.

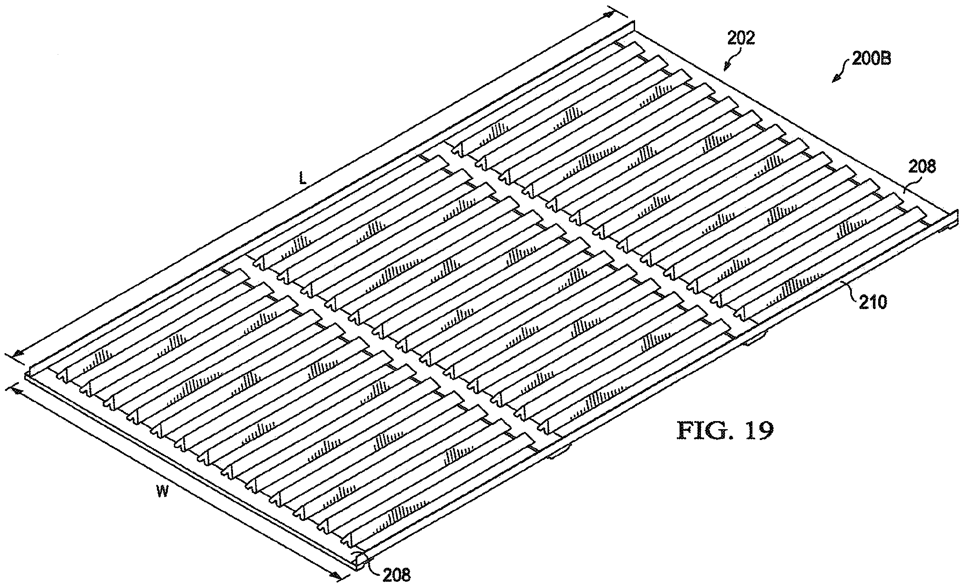

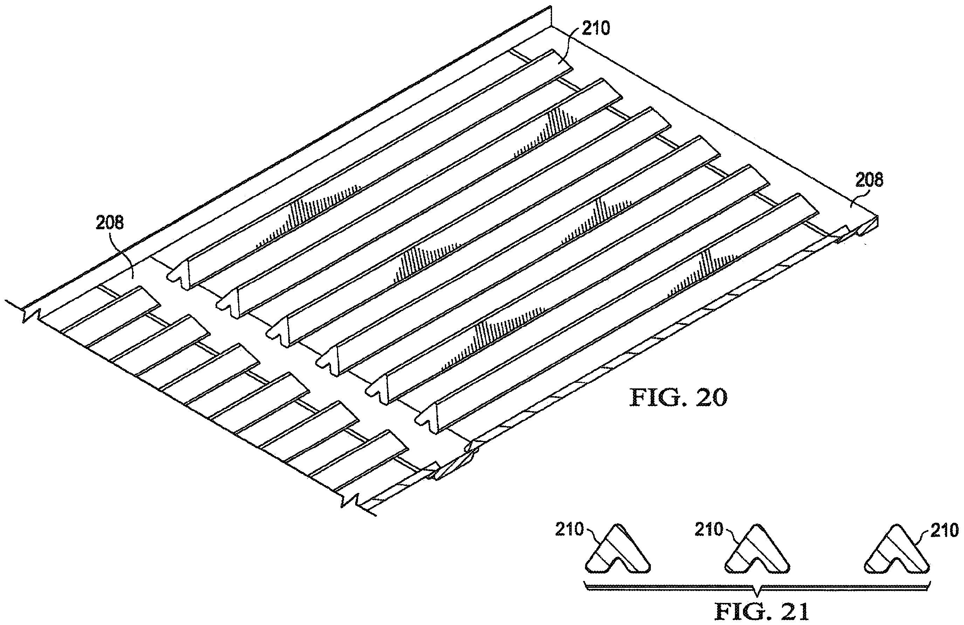

FIG. 19 is a perspective view of a lower portion **200B** of the multi-part cooking grate **200** of FIG. 13. FIG. 20 is a perspective cutaway view of a portion of the lower cooking grate **200B** of FIG. 19, and FIG. 21 is a close-up end cutaway view of a portion of the lower cooking grate of FIG. 19.

FIGS. 13-21 taken together fully illustrate another embodiment of a cooking grate **200** that is somewhat similar in function to the cooking grate **100** previously described. The cooking grate **200** comprises the upper grating **200A** (FIG. 16) and the lower grating **200B** (FIG. 19). From the inset view of FIG. 14, it can be seen how upper V-shaped cooking members **206** overlap with lower V-shaped cooking members **210.** With reference to FIG. 15, it can be seen how relatively little air space is left between the V-shaped cooking members **206** and **210.** Therefore, in the configuration shown in FIGS. 13, 14, and 15, a relatively large amount of heating of food on the cooking surface **202** will be by radiative heating.

With reference to FIGS. 16-18, the upper sub-grating **200A** can be seen. FIGS. 17 and 18 particularly illustrate how a relatively large amount of air space remains between adjacent V-shaped cooking members **206.** Thus, in the configuration of FIG. 16, a relatively large amount of heating will occur by convection. In the present embodiment, the V-shaped cooking members **206** are retained in a fixed relationship relative to one another by upper cross members **204.**

Referring now to FIGS. 19-21, the lower sub-grating **200B** can be seen. Similar to the upper sub-grating **200A,** the lower sub-grating **200B** connects V-shaped cooking members **210** in a fixed relationship relative to one another by lower cross members **208.** As with the upper sub-grating **200A,** the lower sub-grating **200B** will provide for a relatively large amount of convective heating owing in part to the relatively large amount of air space between adjacent V-shaped cooking members **210.**

As with previous embodiments, it can be seen that the cooking surface **202** may be configured as shown in FIG. 13, combining both of the upper sub-grate **200A** and the lower sub-grate **200B** to provide a cooking surface **202** that is heated substantially by radiative heating. In this configuration the lower sub-grate **200B,** with its cooking members **210** interrupted along their length L, allows for the cross members **204** of upper sub-grating **200A** to rest upon the cross members **208** of sub-grating **200B.** Movement between the sub-gratings **200A, 200B** along length L is prevented by the cross members **204** bearing against the interrupted cooking members **210.** Movement along with width W is prevented by the adjacent cooking members **210** and **208** when assembled as shown in FIG. 13.

The upper sub-grating **200A** and/or the lower sub-grating **200B** can be used alone to provide a heating of surface **202** with a greater amount of convection heating relative to radiant heating as compared to the configuration of FIG. 13. As with previous embodiments, the spacing between the V-shaped members **206** and the V-shaped members **210** may not be the same. This may be accomplished, for example, by varying the size of the V-shaped cooking members **206** relative to the V-shaped cooking members **210.** This allows the upper sub-grate **200A,** the lower sub-grating **200B,** and the combined grating **200** to each have different cooking characteristics. The upper sub-grating **200A** and lower sub-grating **200B** are user configurable. A user can vary the cooking characteristics of the cooking surface **202** by utilizing the combined grate **200** as shown in FIG. 13, or either of the sub-grates **200A, 200B.**

The grate **200** may be made from cast or forged material, metal, or ceramic. In some embodiments, a coating (e.g., ceramic or porcelain) may be applied to all or a portion of the grate **200.** As with previous embodiments, the dimensions of the cooking surface **202** are meant to be variable such that existing gas, charcoal, electric, or other grills can be retro-fitted to utilize the devices of the present disclosure. It is also understood that the various cooking members described herein may not be V-shaped in all embodiments. To greater or lesser degrees, other cooking member shapes, such as those that are round or rectilinear in cross-section, may function with the devices of the present disclosure.

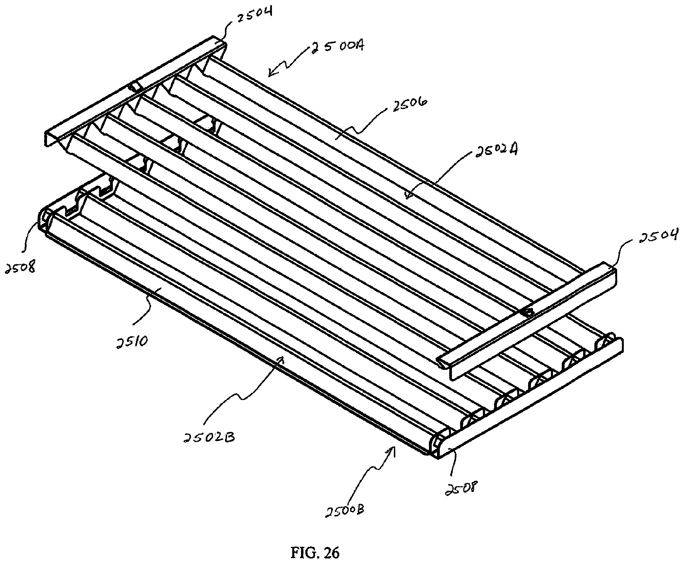

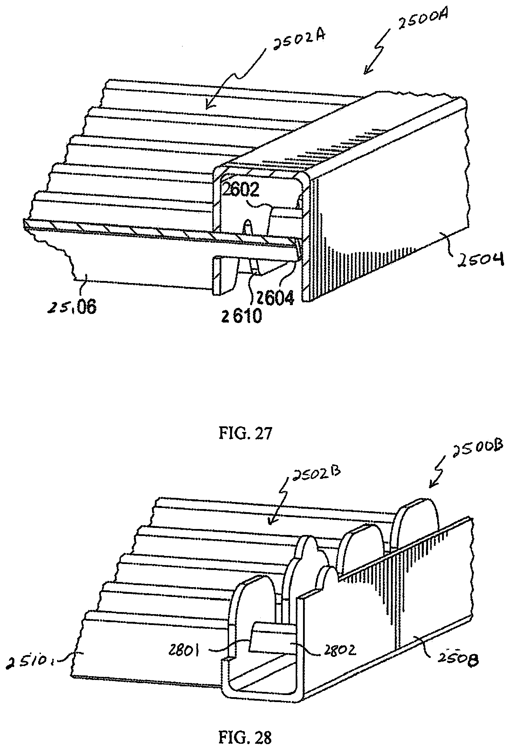

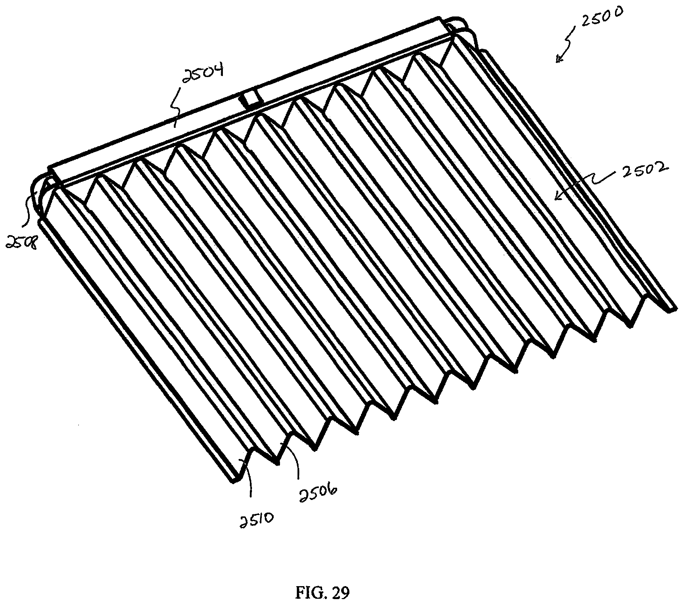

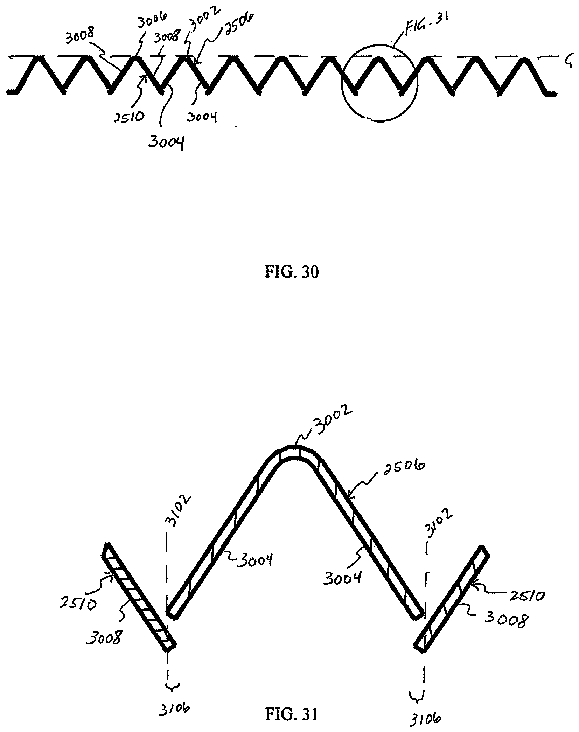

Referring now to FIGS. 25-30, another embodiment of a multi-part cooking grate **2500** according to aspects of the present disclosure is shown. FIG. 25 is a perspective view of the multi-part cooking grate **2500** while FIG. 26 is an exploded perspective view illustrating separated upper and lower cooking grates **2500A** and **2500B,** respectively. FIG. 27 is a perspective side cutaway view of an end portion of the upper cooking grate **2500A** and FIG. 28 is a perspective cutaway view of an end portion of the lower cooking grate **2500B.** FIG. 29 is a cutaway perspective view of the multi-part cooking grate **2500** while FIG. 30 is a cutaway end view of the same. FIG. 31 is a close up view of a portion of FIG. 30.

As with previous embodiments, the grate **2500** comprises a plurality of inverted V-shaped cooking members divided into two sets **2506, 2510.** Although the cooking members **2506, 2510** may comprise shapes other than an inverted V, the relationship between the edges of adjacent cooking members **2506, 2510** is important in some embodiments, as explained below. Together the first set of cooking members **2506** and the end cross members **2504** comprise upper cooking grate or sub-grate **2500A.** The second set of cooking members **2510** may be retained in a fixed relationship with respect to one another by end cross members **2508.** Together the second set of cooking members **2510** and end cross members **2508** comprise lower cooking grate or sub-grate **2500B.** In some embodiments, the cooking members within the sets **2506, 2510** are parallel to one another and the set of cooking members **2506** may be parallel to the set of cooking members **2510** when forming the grate **2500.** As best seen in FIG. 26, the first set of cooking members **2506** may be retained in a fixed relationship with respect to one another by end cross members **2504.**

The lower grate **2500A** cooperates with the upper grate **2500B** to form the complete grate **2500** forming the full cooking surface **2502.** The set of cooking members **2506** is interleaved with the set of cooking members **2510** to form the cooking surface **2502.** That is to say, in some embodiments, one of the cooking members **2510** will be flanked on either side by one of cooking members **2506** and vice versa (excepting outermost cooking members). Each of the sub-grates **2500A** and **2500B** may also be an integrated component and be utilized separately to alter cooking characteristics of the surface **2502** or form separate cooking surfaces **2502A, 2502B,** respectively. By integrated component it is meant that the component is not intended to be further broken down or taken apart by a user, but will normally remain a single piece during use or even routine disassembly and cleaning activities.

FIGS. 27 and 28 provide additional illustration of the relationship between the cross members **2504** and V-shaped cooking members **2506,** and the cross members **2508** and V-shaped members **2510,** respectively. As shown in FIG. 27, the cross members **2504** may comprise channelized members with cutouts **2602** for receiving a portion **2604** of each of the V-shaped cooking members **2506** and retaining them in a fixed relationship. The portion **2604** within the cutout **2602** may only be a portion of the entire end of the V-shaped cooking members **2506.** The cross members **2504** may also provide a series of V-shaped cooperating recesses **2610** on at least one side for interfitting with the cooking members **2510** from sub-grating **2500B.**

As shown in FIG. 28, the cross members **2508** may also be channelized with one side having cutouts **2801** for receiving a portion **2802** of the respective lower cooking members **2510** to form the lower sub-grating **2500B.** The portions **2802** may be retained in the cutouts **2801** by a friction fit, or may be welded or provided with another heat resistant fastener. The portions **2802** of the members **2510** fitting the cutouts **2801** may be cut from the full V-shaped cooking members **2510** rather than comprising the full height and width of the members **2510** at the ends.

The two sets of cooking members **2506, 2510** may be made from a heat resistant material such as steel, stainless steel, porcelain coated steel, ceramic, ceramic coated metal, or some other suitable material. The cross members **2504, 2508** may also comprise a heat resistant material. The cross members **2504, 2508** may be welded to the respective cooking members **2506, 2610,** have a friction or interference fit, or be affixed in another heat resistant manner.

As best seen in FIG. 25, the cross members **2504** and **2508** nest when assembled into the full cooking grate **2500** to prevent end-to-end movement (along length L2) of the assembled cooking grate **2500.** Here the lower cross member **2508** nests within the upper cross member **2504,** but the converse could also be implemented. Side-to-side movement (along width W2) is inhibited by the interlocking of the upper cooking members **2506** beside the lower cooking members **2510B,** the fitting of the lower cooking members **2510** into the recesses **2610** of the upper cross members **2504,** and/or the partial fitting of the upper cooking members **2506** into the lower cross member **2508.**

As illustrated, the cross members **2504, 2508** also serve as end caps such that the respective cooking members **2506, 2510** are held in a fixed relationship from the ends, thus allowing the cooking surface **2502** to be more or less continuous between opposite ends. However, in other embodiments, some cross members may be placed medially (not shown) rather than, or in addition to, being placed on the ends. Such medial cross members may have cutouts on both sides for passing at least a portion of the cooking members **2506, 2510** completely through.

As described to this point, the cooking grate **2500** bears some substantial similarities to the cooking grate **100** of FIGS. 1-12 previously discussed. However, some distinctions may be seen as well. These may be most readily appreciated from the illustrations of cooking grate **2500** provided in FIGS. 29-31 (a cutaway perspective view, a cutaway end view, and a close up view, respectively). The structure of the individual cooking members **2506, 2510** may be that of an inverted V. The cooking members **2506** of the upper grate **2500A** have an apex or terminus **3002** representing the tops or highest points of each of cooking members **2506.** Spaced apart legs **3004** descend downwardly and away from the apex **3002.** The structure of the cooking members **2510** of the lower grate **2500B** is similar in some respects. The cooking members **2510** provide an apex **3006** with a pair of spaced apart legs **3008** descending downwardly and away from apex **3006.**

The respective apices **3002, 3006** are at approximately the same level "G" across the cooking surface **2502** when the upper sub-grate **2504** is fitted onto the lower sub-grate **2508.** However, the lower legs **3004, 3008** of the respective cooking members **2506, 2510** of upper sub-grate **2504** and lower sub-grate **2508** may terminate at different lower points. As best seen in FIG. 31, the legs **3004** of cooking members **2506** may terminate above the legs **3008** of the cooking members **2510.**

As the legs **3004** terminate at least slightly above the legs **3008,** some lateral overlap may be provided when the sub-grate **2504** is assembled onto the sub-grate **2508.** As best seen in FIG. 31, the overlap may be such that there is no straight vertical path from below the cooking grate **2500** to the top thereof. For illustration, vertical lines **3102** are provided at the outer edge of legs **3004** and these can be seen to pass through legs **3008.** Correspondingly, if the vertical lines **3102** were to move to outer edges of legs **3008,** they would pass through legs **3004.** Thus, the legs **3008** may have both lateral and vertical overlap with the legs **3004.** It should also be understood that the term "vertical" should be understood to mean substantially vertical. In one embodiment, a vertical line is blocked if the angle with respect to horizontal of a line drawn from anywhere on the horizontal plane (e.g., defined by the apices **3002, 3006)** and passing through the grate assembly without touching either cooking members **2510** or **2506** is less than 90 degrees. In another embodiment, such vertical line is blocked if the angle with respect to horizontal is less than 80 degrees, 70 degrees, or 60 degrees.

One advantage of providing overlap such that there is no straight vertical pathway through the cooking surface **2502** of the fully assembled cooking grate **2500** is that of decreased burning or charring of food. Any flames or flare-ups from the heat source below (either from cooking fuel or ignition of grease or drippings) will encounter a crooked or tortured path through the cooking grate **2500.** This will tend to substantially reduce or even eliminate contact between flame and food. Radiative heating from the cooking grate **2500** will remain unabated. Convection gases can also flow through the tortured pathway remaining between adjacent legs **3004, 3008** (though this may also be somewhat reduced from that seen through a straight path).

Exact spacing and positioning between legs **3004, 3008** may vary and yet achieve the effects described herein. In FIG. 31, it can be seen that the adjacent cooking members **2506, 2510** may not be in contact, yet the interruption of a vertical path from below the cooking members to above the cooking surface **2502** prevents flame from contacting food being cooked. Overlap **3106** between adjacent members **2506, 2510** can vary as well, but even a small degree of overlap (such that there is no clear vertical pathway) may prevent flare ups or contact between flame and food. Additionally manufacturing variations in the angle of form of the inverted V shape of cooking elements **2506, 2510,** (e.g., as might be seen along the length of these elements as a waviness in the lower edges), can be more easily accommodated without losing effectiveness and ability to fit together compared to the embodiments as described and shown in Fig 4

As with previous embodiments, the cooking grate **2500** may be assembled as shown in FIG. 25 such that the combined V-shaped cooking members **2506** and **2510** provide for relatively little hot gas flow to the cooking surface **2502.** Consequently, when configured as shown in FIG. 25, the cooking grate **2500** will provide a relatively larger amount of radiative heating. When either one of the upper or lower sub-grates **2500A, 2500B** is used alone, a relatively large amount of hot gas will be allowed through the cooking surface **2502.** The cooking surface **2502** may be easily and quickly reconfigured to utilize either or both of the sub-grates **2500A, 2500B** without tools. The multi-part construction of the cooking grate **2500** also allows easy cleaning of the cooking surface **2502** separated into the sub-grates **2500A, 2500B.**

Space between adjacent V-shaped cooking members of the first set **2506** may be the same as the spacing between adjacent V-shaped members of the second set **2510,** or this spacing may differ. A differing spacing between cooking members **2506** versus cooking members **2510** allows for different cooking characteristics when either sub-grate **2500A, 2500B** is used alone. Different spacings between cooking members **2506** or between cooking members **2510** may be accomplished, for example, by varying the widths of the members **2506, 2510** themselves, or varying the degree of bend they contain (e.g., the angle of the apices **3002, 3006).** It should be understood that the indirect or tortured flame path (e.g., no unimpeded vertical path through the cooking surface **2502)** may not be present where either sub-grate **2500A, 2500B** is used alone.

The cooking members **2500A, 2500B** are V-shaped in all embodiments. To greater or lesser degrees, other cooking member shapes, such as round or rectilinear in cross-section, could function with some embodiments of devices not forming part of the present invention. However, in embodiments for which an indirect or tortured flame path is desired, shapes for the cooking members **2506, 2510** should be chosen that accommodate this while still allowing for easy assembly and disassembly of the cooking grate **2500** into sub-grates **2500A, 2500B.**

The general dimensions of the cooking surface **2502** and the constituent components of the cooking grate **2500** can be varied according to the needs of the user such that existing gas, charcoal, electric, and other grills can be retrofitted to utilize devices of the present disclosure. In one embodiment, the materials used for the construction of the cooking grate **2500** is cast iron.

It is to be understood that the terms "including", "comprising", "consisting" and grammatical variants thereof do not preclude the addition of one or more components, features, steps, or integers or groups thereof and that the terms are to be construed as specifying components, features, steps or integers.

If the specification or claims refer to "an additional" element, that does not preclude there being more than one of the additional element.

It is to be understood that where the claims or specification refer to "a" or "an" element, such reference is not to be construed that there is only one of that element.

It is to be understood that where the specification states that a component, feature, structure, or characteristic "may", "might", "can" or "could" be included, that particular component, feature, structure, or characteristic is not required to be included.

Where applicable, although state diagrams, flow diagrams or both may be used to describe embodiments, the invention is not limited to those diagrams or to the corresponding descriptions. For example, flow need not move through each illustrated box or state, or in exactly the same order as illustrated and described.

Methods of the present invention may be implemented by performing or completing manually, automatically, or a combination thereof, selected steps or tasks.

The term "method" may refer to manners, means, techniques and procedures for accomplishing a given task including, but not limited to, those manners, means, techniques and procedures either known to, or readily developed from known manners, means, techniques and procedures by practitioners of the art to which the invention belongs.

The term "at least" followed by a number is used herein to denote the start of a range beginning with that number (which may be a ranger having an upper limit or no upper limit, depending on the variable being defined). For example, "at least 1" means 1 or more than 1. The term "at most" followed by a number is used herein to denote the end of a range ending with that number (which may be a range having 1 or 0 as its lower limit, or a range having no lower limit, depending upon the variable being defined). For example, "at most 4" means 4 or less than 4, and "at most 40%" means 40% or less than 40%.

When, in this document, a range is given as "(a first number) to (a second number)" or "(a first number) - (a second number)", this means a range whose lower limit is the first number and whose upper limit is the second number. For example, 25 to 100 should be interpreted to mean a range whose lower limit is 25 and whose upper limit is 100. Additionally, it should be noted that where a range is given, every possible subrange or interval within that range is also specifically intended unless the context indicates to the contrary. For example, if the specification indicates a range of 25 to 100 such range is also intended to include subranges such as 26 -100, 27-100, etc., 25-99, 25-98, etc., as well as any other possible combination of lower and upper values within the stated range, e.g., 33-47, 60-97, 41-45, 28-96, etc. Note that integer range values have been used in this paragraph for purposes of illustration only and decimal and fractional values (e.g., 46.7 - 91.3) should also be understood to be intended as possible subrange endpoints unless specifically excluded.

It should be noted that where reference is made herein to a method comprising two or more defined steps, the defined steps can be carried out in any order or simultaneously (except where context excludes that possibility), and the method can also include one or more other steps which are carried out before any of the defined steps, between two of the defined steps, or after all of the defined steps (except where context excludes that possibility).

Further, it should be noted that terms of approximation (e.g., "about", "substantially", "approximately", etc.) are to be interpreted according to their ordinary and customary meanings as used in the associated art unless indicated otherwise herein. Absent a specific definition within this disclosure, and absent ordinary and customary usage in the associated art, such terms should be interpreted to be plus or minus 10% of the base value.

Thus, the present invention is well adapted to carry out the objects and attain the ends and advantages mentioned above as well as those inherent therein. While the inventive device has been described and illustrated herein by reference to certain preferred embodiments in relation to the drawings attached thereto, various changes and further modifications, apart from those shown or suggested herein, may be made therein by those of ordinary skill in the art, without departing from the scope of the invention which is to be determined by the following claims.

## Claims

1. A cooking grate (2500) comprising:
a first upper sub-grate (2500A) having a first plurality of cooking members (2506) retained in a fixed relationship relative to one another by at least one upper cross-member (2504); and
a second lower sub-grate (2500B) having a second plurality of cooking members (2510) retained in a fixed relationship relative to one another by at least one lower cross member (2508);
wherein the first and second sub-grates are configured to fit together such that their respective cooking members overlap laterally to define a first cooking surface (2502) that is heatable with a higher degree of radiant heating relative to convective heating;
wherein respective cooking members of the first and second sub-grate each are spaced apart to define a second cooking surface that is heatable with a lower degree of radiant heating relative to convective heating; and
wherein the first and second sub-grate fit together such that their respective cooking members overlap laterally so that only an indirect path remains from below the cooking surface to above the cooking surface such that flame is impeded from travelling from below the cooking surface to above the cooking surface;
wherein the cooking members of the first and second sub-grates have an inverted V shape with vertices (3002; 3006) of the cooking members of the first and second sub-grates terminating at substantially the same level to form the first cooking surface.

2. The cooking grate of claim 1:
wherein the first sub-grate retains its associated cooking members at a first predetermined spacing from one another;
wherein the second sub-grate retains its associated cooking members at a second predetermined spacing from one another; and
wherein the first and second predetermined spacings are different so as to provide different degrees of heating between radiant and convective heating.

3. A cooking grate (2500) comprising:
two integrated sub-grates (2500A, 2500B) each having two end cross members (2504, 2508) maintaining a plurality of cooking members (2506, 2510) in a fixed relationship with respect to one another;
wherein the cross members on at least one end of each of the respective sub-grates nest to prevent end to end movement between the sub-grates; and
wherein the cooking members of one sub-grate overlap laterally with the cooking members of the other sub-grate forms a cooking surface (2502) operable to prevent contact between a cooking flame coming from below the cooking surface to food resting atop the cooking surface by blocking any straight vertical path through the cooking surface;
wherein the plurality of cooking members of each of the sub-grates comprise inverted V shapes with apices (3002, 3006) terminating at the same level to form the cooking surface.

4. The cooking grate of claim 3, wherein each sub-grate has two cross members with one affixed at opposite ends of the plurality of cooking members, and optionally wherein each sub-grate forms a separate cooking surface that may be used alone and each separate cooking surface provides a relatively higher degree of convective cooking energy than the cooking surface formed by the combined sub-grates.

5. A cooking grate (2500) comprising:
a first sub-grate (2500A) formed from a first plurality of parallel cooking members (2506) held in a fixed relationship by a first cross member; and
a second sub-grate (2500B) formed from a second plurality of parallel cooking members (2510) held in a fixed relationship by a second cross member;
wherein the respective cooking members of the first and second sub-grates overlap laterally to form a cooking surface (2502) that prevents flames from travelling therethrough to food on the cooking surface by blocking vertical pathways therethrough;
wherein the cooking members of the first and second sub-grates have an inverted V shape and have apices (3002; 3006) at the same level to form the cooking surface.

6. The cooking grate of claim 5, wherein the first and second cross members removably nest to prevent lengthwise movement between the first and second plurality of cooking members.

7. The cooking grate of claim 6, wherein the first and second sub-grates may each be used as a separate cooking surface that provides a pathway for a flame from below to contact food on the separate cooking surfaces, and optionally wherein each of the first and second sub-grates has an additional cross member and the two cross members for each of the first and second-sub grates form end caps to the respective parallel cooking members.

## Patentansprüche

1. Kochgitterrost (2500), umfassend:
einen ersten oberen Teilrost (2500A), der eine erste Vielzahl von Kochelementen (2506) aufweist, die von mindestens einem oberen Querelement (2504) in einer festen Beziehung zueinander gehalten werden; und
einen zweiten unteren Teilrost (2500B), der eine zweite Vielzahl von Kochelementen (2510) aufweist, die durch mindestens ein unteres Querelement (2508) in einer festen Beziehung zueinander gehalten werden;
wobei der erste und der zweite Teilrost so konfiguriert sind, dass sie so zusammenpassen, dass sich ihre jeweiligen Kochelemente seitlich überlappen, um eine erste Kochfläche (2502) zu definieren, die mit einem höheren Grad an Strahlungserwärmung in Relation zu Konvektionserwärmung beheizbar ist;
wobei die jeweiligen Kochelemente des ersten und des zweiten Teilrosts jeweils voneinander beabstandet sind, um eine zweite Kochfläche zu definieren, die mit einem geringeren Grad an Strahlungserwärmung in Relation zu Konvektionserwärmung beheizbar ist; und
wobei der erste und der zweite Teilrost so zusammenpassen, dass sich ihre jeweiligen Kochelemente seitlich überlappen, so dass nur ein indirekter Pfad von unterhalb der Kochfläche zu oberhalb der Kochfläche verbleibt, sodass die Flamme daran gehindert wird, von unterhalb der Kochfläche zu oberhalb der Kochfläche zu wandern;
wobei die Kochelemente des ersten und des zweiten Teilrosts eine umgekehrte V-Form aufweisen, wobei Scheitelpunkte (3002; 3006) der Kochelemente des ersten und des zweiten Teilrosts im Wesentlichen auf derselben Höhe enden, um die erste Kochfläche zu bilden.

2. Kochgitterrost nach Anspruch 1:
wobei der erste Teilrost seine zugehörigen Kochelemente in einem ersten vorbestimmten Abstand voneinander hält;
wobei der zweite Teilrost seine zugehörigen Kochelemente in einem zweiten vorbestimmten Abstand voneinander hält; und
wobei der erste und der zweite vorbestimmte Abstand unterschiedlich sind, um unterschiedliche Erwärmungsgrade zwischen Strahlungs- und Konvektionserwärmung bereitzustellen.

3. Kochgitterrost (2500), umfassend:
zwei integrierte Teilroste (2500A, 2500B), von denen jeder zwei Endquerelemente (2504, 2508) aufweist, die eine Vielzahl von Kochelementen (2506, 2510) in einer festen Beziehung zueinander halten;
wobei die Querelemente an mindestens einem Ende jedes der jeweiligen Teilroste ineinandergreifen, um eine Bewegung von Ende zu Ende zwischen den Teilrosten zu verhindern; und
wobei sich die Kochelemente eines Teilrosts seitlich mit den Kochelementen des anderen Teilrosts überlappen und eine Kochfläche (2502) bilden, die betreibbar ist, um den Kontakt einer Kochflamme, die von unterhalb der Kochfläche kommt, mit Nahrungsmitteln zu verhindern, die auf der Kochfläche liegen, indem jeglicher gerader vertikaler Pfad durch die Kochfläche blockiert wird;
wobei die Vielzahl von Kochelementen von jedem der Teilroste umgekehrte V-Formen mit Spitzen (3002, 3006) umfasst, die auf derselben Höhe enden, um die Kochfläche zu bilden.

4. Kochgitterrost nach Anspruch 3, wobei jeder Teilrost zwei Querelemente aufweist, von denen eines an gegenüberliegenden Enden der Vielzahl von Kochelementen angebracht ist, und wobei optional jeder Teilrost eine separate Kochfläche bildet, die einzeln verwendet werden kann, und jede separate Kochfläche einen relativ höheren Grad an konvektiver Kochenergie als die Kochfläche bereitstellt, die aus den kombinierten Teilrosten gebildet ist.

5. Kochgitterrost (2500), umfassend:
einen ersten Teilrost (2500A), der aus einer ersten Vielzahl paralleler Kochelemente (2506) gebildet ist, die durch ein erstes Querelement in einer festen Beziehung gehalten werden; und
einen zweiten Teilrost (2500B), der aus einer zweiten Vielzahl paralleler Kochelemente (2510) gebildet ist, die durch ein zweites Querelement in einer festen Beziehung gehalten werden;
wobei sich die jeweiligen Kochelemente des ersten und des zweiten Teilrosts seitlich überlappen, um eine Kochfläche (2502) zu bilden, die verhindert, dass Flammen durch sie hindurch zu Nahrungsmitteln auf der Kochfläche wandern, indem sie vertikale Wege hindurch blockiert;
wobei die Kochelemente des ersten und des zweiten Teilrosts eine umgekehrte V-Form aufweisen und Spitzen (3002; 3006) auf derselben Höhe aufweisen, um die Kochfläche zu bilden.

6. Kochgitterrost nach Anspruch 5, wobei das erste und das zweite Querelement abnehmbar ineinandergreifen, um eine Längsbewegung zwischen der ersten und zweiten Vielzahl von Kochelementen zu verhindern.

7. Kochgitterrost nach Anspruch 6, wobei der erste und der zweite Teilrost jeweils als eine separate Kochfläche verwendet werden können, die einen Pfad für eine Flamme von unten bereitstellt, um mit Lebensmitteln auf den separaten Kochflächen in Kontakt zu kommen, und wobei optional jeder des ersten und des zweiten Teilrosts ein zusätzliches Querelement aufweist und die zwei Querelemente für jeden des ersten und des zweiten Teilrosts Endkappen für die jeweiligen parallelen Kochelemente bilden.

## Revendications

1. Grille de cuisson (2500) comprenant :
une première sous-grille supérieure (2500A) présentant une première pluralité d'éléments de cuisson (2506) retenus dans une relation fixe les uns par rapport aux autres par au moins un élément transversal supérieur (2504) ; et
une seconde sous-grille inférieure (2500B) présentant une seconde pluralité d'éléments de cuisson (2510) retenus dans une relation fixe les uns par rapport aux autres par au moins un élément transversal inférieur (2508) ;
dans laquelle les première et seconde sous-grilles sont configurées pour s'ajuster ensemble de telle sorte que leurs éléments de cuisson respectifs se chevauchent latéralement pour définir une première surface de cuisson (2502) qui peut être chauffée avec un degré plus élevé de chauffage par rayonnement par rapport au chauffage par convection ;
dans laquelle des éléments de cuisson respectifs de la première et de la seconde sous-grille sont chacun espacés pour définir une seconde surface de cuisson qui peut être chauffée avec un degré inférieur de chauffage par rayonnement par rapport au chauffage par convection ; et
dans laquelle les première et seconde sous-grilles s'ajustent ensemble de telle sorte que leurs éléments de cuisson respectifs se chevauchent latéralement de sorte qu'il ne reste qu'un trajet indirect depuis le dessous de la surface de cuisson vers le dessus de la surface de cuisson de sorte que la flamme ne puisse pas se déplacer depuis le dessous de la surface de cuisson vers le dessus de la surface de cuisson ;
dans laquelle les éléments de cuisson des première et seconde sous-grilles présentent une forme de V inversé avec des sommets (3002 ; 3006) des éléments de cuisson des première et seconde sous-grilles se terminant sensiblement au même niveau pour former la première surface de cuisson.

2. Grille de cuisson selon la revendication 1 :
dans laquelle la première sous-grille retient ses éléments de cuisson associés à un premier espacement prédéterminé les uns des autres ;
dans laquelle la seconde sous-grille retient ses éléments de cuisson associés à un second espacement prédéterminé les uns des autres ; et
dans laquelle les premier et second espacements prédéterminés sont différents de manière à fournir différents degrés de chauffage entre le chauffage par rayonnement et par convection.

3. Grille de cuisson (2500) comprenant :
deux sous-grilles intégrées (2500A, 2500B) présentant chacune deux éléments transversaux d'extrémité (2504, 2508) maintenant une pluralité d'éléments de cuisson (2506, 2510) dans une relation fixe les uns par rapport aux autres ;
dans laquelle les éléments transversaux sur au moins une extrémité de chacune des sous-grilles respectives s'emboîtent pour empêcher un mouvement bout à bout entre les sous-grilles ; et
dans laquelle les éléments de cuisson d'une sous-grille se chevauchent latéralement avec les éléments de cuisson de l'autre sous-grille pour former une surface de cuisson (2502) utilisable pour empêcher un contact entre une flamme de cuisson venant du dessous de la surface de cuisson et les aliments reposant sur la surface de cuisson en bloquant tout chemin vertical droit à travers la surface de cuisson ;
dans laquelle la pluralité d'éléments de cuisson de chacune des sous-grilles comprennent des formes en V inversé avec des sommets (3002, 3006) se terminant au même niveau pour former la surface de cuisson.

4. Grille de cuisson selon la revendication 3, dans laquelle chaque sous-grille présente deux éléments transversaux dont l'un est fixé aux extrémités opposées de la pluralité d'éléments de cuisson et, facultativement, dans laquelle chaque sous-grille forme une surface de cuisson distincte qui peut être utilisée seule et chaque surface de cuisson distincte fournit un degré relativement plus élevé d'énergie de cuisson par convection que la surface de cuisson formée par les sous-grilles combinées.

5. Grille de cuisson (2500) comprenant :
une première sous-grille (2500A) formée à partir d'une première pluralité d'éléments de cuisson parallèles (2506) maintenus dans une relation fixe par un premier élément transversal ; et
une seconde sous-grille (2500B) formée à partir d'une seconde pluralité d'éléments de cuisson parallèles (2510) maintenus dans une relation fixe par un second élément transversal ;
dans laquelle les éléments de cuisson respectifs des première et seconde sous-grilles se chevauchent latéralement pour former une surface de cuisson (2502) qui empêche les flammes de se déplacer à travers celle-ci vers des aliments sur la surface de cuisson en bloquant des chemins verticaux à travers celle-ci ;
dans laquelle les éléments de cuisson des première et seconde sous-grilles présentent une forme de V inversé et présentent des sommets (3002 ; 3006) au même niveau pour former la surface de cuisson.

6. Grille de cuisson selon la revendication 5, dans laquelle les premier et second éléments transversaux s'emboîtent de manière amovible pour empêcher un mouvement longitudinal entre les première et seconde pluralités d'éléments de cuisson.

7. Grille de cuisson selon la revendication 6, dans laquelle les première et seconde sous-grilles peuvent chacune être utilisées comme surface de cuisson distincte qui fournit un chemin pour qu'une flamme venant du dessous entre en contact avec des aliments sur les surfaces de cuisson distinctes et, facultativement, dans laquelle chacune des première et seconde sous-grilles présente un élément transversal supplémentaire et les deux éléments transversaux pour chacune des première et seconde sous-grilles forment des capuchons d'extrémité pour les éléments de cuisson parallèles respectifs.
